# EUROPÄISCHE PATENTSCHRIFT

(11) **EP 2 803 539 B1**
(45) Veröffentlichungstag und Bekanntmachung des Hinweises auf die Patenterteilung: **03.06.2015**
(21) Anmeldenummer: 14165378.2
(22) Anmeldetag: 22.04.2014
(51) Int. Cl.: B60R 22/46

(54) **Gurtaufroller**
Belt retractor
Enrouleur de ceinture

(30) Priorität: 15.05.2013 DE 102013208947
(43) Veröffentlichungstag der Anmeldung: 19.11.2014
(73) Patentinhaber: Takata AG, 63743 Aschaffenburg (DE)
(72) Erfinder: Toth, Armin, 89160 Dornstadt (DE); Schrade, Wolfgang, 72589 Westerheim (DE)
(74) Vertreter: Fischer, Uwe

(56) Entgegenhaltungen:
- DE-A1-102009 032 101
- US-B1- 6 416 008

## Beschreibung

Die Erfindung bezieht sich auf einen Gurtaufroller für einen Sicherheitsgurt mit den Merkmalen gemäß dem Oberbegriff des Patentanspruchs 1.

Ein solcher Gurtaufroller ist aus der deutschen Offenlegungsschrift DE 10 2009 032 101 A1 bekannt. Dieser vorbekannte Gurtaufroller weist eine Gurtspule zum Auf- und Abwickeln eines Sicherheitsgurts, eine mit der Gurtspule in Verbindung stehende sperrbare Sperrbasis, die zum Blockieren der Gurtspule im Falle eines Drehens der Gurtspule in Gurtabwickelrichtung geeignet ist, und ein Kraftübertragungselement auf. Das Kraftübertragungselement koppelt in einer Verriegelungsposition die Gurtspule und die Sperrbasis und ist in einer Entriegelungsposition inaktiv. Ein Inaktivschalten des Kraftübertragungselements bzw. ein Verbringen des Kraftübertragungselements von der Verriegelungsposition in die Entriegelungsposition erfolgt bei dem vorbekannten Gurtaufroller mittels eines halbringförmigen Trägheitselements, das zwei unterschiedlich tiefe Vertiefungen aufweist und je nach seiner Stellung das Kraftübertragungselement weiter oder weniger weit aus der Gurtspule herausragen lässt und somit ein Eingreifen in eine Ausnehmung der Sperrbasis erlaubt oder unterbindet. Das Umschalten bzw. Verdrehen des halbringförmigen Trägheitselements erfolgt trägheitsbedingt, sobald ein Strafferantrieb des Gurtaufrollers aktiviert wird und eine Relativdrehung der Gurtspule relativ zu dem Trägheitselement hervorgerufen wird.

Darüber hinaus sind im Stand der Technik Gurtaufroller bekannt, bei denen abscherbare Scherpins die Gurtspule und die Sperrbasis miteinander verbinden. Überschreitet die auf den Scherpin wirkende Kraft eine vorgegebene Kraftschwelle, so kommt es zu einem Abscheren des Scherpins.

Der Erfindung liegt die Aufgabe zugrunde, einen Gurtaufroller anzugeben, der mit möglichst wenigen Teilen herstellbar ist.

Diese Aufgabe wird erfindungsgemäß durch einen Gurtaufroller mit den Merkmalen gemäß Patentanspruch 1 gelöst. Vorteilhafte Ausgestaltungen des erfindungsgemäßen Gurtaufrollers sind in Unteransprüchen angegeben.

Danach ist erfindungsgemäß vorgesehen, dass das Kraftübertragungselement einen Grundkörper und einen abscherbaren Scherabschnitt aufweist, wobei der Grundkörper in einer Ausnehmung eines der beiden Teile, also der Gurtspule oder der Sperrbasis - nachfolgend erstes Teil genannt -,axial verschieblich gehalten wird und von einer ersten Position, in der der Grundkörper aus der Ausnehmung herausragt und in das andere der beiden Teile - nachfolgend zweites Teil genannt - eingreift, in eine zweite Position, in der der Grundkörper tiefer in die Ausnehmung eingeführt ist und von dem zweiten Teil getrennt ist, axial verschoben werden kann, und wobei der Scherabschnitt in der ersten Position des Grundkörpers ein axiales Verschieben des Grundkörpers von der ersten in die zweite Position blockiert und erst nach einem Abscheren das tiefere Hineinschieben des Grundkörpers in die Ausnehmung ermöglicht.

Ein wesentlicher Vorteil des erfindungsgemäßen Gurtaufrollers ist darin zu sehen, dass eine Deaktivierung des Kraftübertragungselements drehrichtungsabhängig sein bzw. in Abhängigkeit von der Drehrichtung der Gurtspule mit unterschiedlichen Kraftniveaus erfolgen kann: Beispielsweise kann in Gurtaufwickelrichtung eine geringere Deaktivierungskraft als in Gurtabwickelrichtung vorgesehen werden. So ist es beispielsweise möglich, ein Deaktivieren des Kraftübertragungselements durch ein Abscheren des Scherabschnitts vorzusehen, sobald ein Strafferantrieb des Gurtaufrollers aktiv wird und die Gurtspule in Gurtaufwickelrichtung drehen will. In der Gurtabwickelrichtung hingegen kann die Stabilität des Kraftübertragungselements deutlich höher sein, so dass auch im Falle einer Vorverlagerung des Fahrzeuginsassen und einer entsprechend hohen Gurtauszugskraft das Kraftübertragungselement aktiv bleiben kann.

Ein weiterer wesentlicher Vorteil des erfindungsgemäßen Gurtaufrollers ist darin zu sehen, dass - vor einem Abscheren des Scherabschnitts - das Kraftübertragungselement in Gurtabwickelrichtung Schäden an anderen Komponenten, beispielsweise einem Torsionsstab des Gurtaufrollers, vermeiden kann.

Ein zusätzlicher wesentlicher Vorteil des erfindungsgemäßen Gurtaufrollers besteht darin, dass durch ein Abscheren des Scherabschnitts bei Inbetriebnahme des Strafferantriebs das Kraftübertragungselement inaktiv gemacht werden kann, bevor es die Funktion einer nach dem Straffen wirkenden Kraftbegrenzungseinrichtung - wie beispielsweise eines Torsionsstabs - behindern kann; eine Kraftüberhöhung durch das Kraftübertragungselement während der nach Abschluss des Straffvorgangs einsetzenden Phase der Gurtkraftbegrenzung ist somit ausgeschlossen.

Bezüglich der Ausgestaltung des Scherabschnitts wird es als vorteilhaft angesehen, wenn dieser eine Anschlagsfläche aufweist, gegen die das zweite Teil bei Drehung der Gurtspule in Gurtaufwickelrichtung radial drückt und über die ein Abscheren des Scherabschnitts durch das zweite Teil bei Drehen der Gurtspule in Gurtaufwickelrichtung erfolgt, wenn die auf die Anschlagsfläche wirkende Gurtaufwickelkraft eine vorgegebene Kraftschwelle überschreitet.

Wie bereits erwähnt, ist ein Kraftübertragungselement mit Grundkörper und abscherbaren Scherabschnitt insbesondere dann von Vorteil, wenn der Gurtaufroller mit einem Strafferantrieb ausgestattet ist; demgemäß wird es als vorteilhaft angesehen, wenn der Gurtaufroller einen Strafferantrieb aufweist und die Stabilität des Scherabschnitts derart gewählt ist, dass bei Inbetriebnahme des Strafferantriebs der Scherabschnitt abgeschert wird und der Grundkörper von der ersten in die zweite Position verschoben werden kann.

Mit Blick auf eine Bewegung des Grundkörpers nach einem Abscheren des Scherabschnitts wird es als vorteilhaft angesehen, wenn der Gurtaufroller eine Feder aufweist, deren Federkraft den Grundkörper in Richtung der zweiten Position bewegen will. Bei der Feder kann es sich beispielsweise um eine Druckfeder oder um eine Zugfeder handeln.

Bezüglich des Zusammenwirkens des Kraftübertragungselements mit dem zweiten Teil wird es als vorteilhaft angesehen, wenn das zweite Teil eine Ausnehmung mit einem ersten Aufnahmeabschnitt und einem zweiten Aufnahmeabschnitt aufweist und in der ersten Position des Grundkörpers ein Abschnitt des Grundkörpers in den ersten Aufnahmeabschnitt des zweiten Teils und der Scherabschnitt in den zweiten Aufnahmeabschnitt des zweiten Teils eingreift.

Vorteilhaft ist es, wenn der erste Aufnahmeabschnitt des zweiten Teils größer als der darin befindliche Abschnitt des Grundkörpers ist und der Grundkörper in dem ersten Aufnahmeabschnitt Spiel hat. Ein gewisses Spiel vereinfacht es, nach einem Abscheren des Scherabschnitts den Grundkörper von dem zweiten Teil zu trennen, um den Kraftfluss zwischen Gurtspule und Sperrbasis zu unterbinden.

Um auch eine Kraftbegrenzung in Gurtabwickelrichtung zu erreichen, wird es als vorteilhaft angesehen, wenn der Grundkörper bei Erreichen oder Überschreiten einer vorgegebenen Kraft in Gurtabwickelrichtung selbst abscherbar ist.

Als vorteilhaft wird es für den letztgenannten Fall angesehen, wenn der Grundkörper mechanisch stabiler als der Scherabschnitt ist und die zum Abscheren des Grundkörpers erforderliche Scherkraft größer als die zum Abscheren des Scherabschnitts erforderliche Scherkraft ist.

Vorzugsweise weist der Scherabschnitt eine Auflagefläche auf, die in axialer Richtung außen auf dem ersten Teil aufliegt und vor einem Abscheren des Scherabschnitts ein Verschieben des Grundkörpers von der ersten in die zweite Position blockiert.

Bevorzugt stehen die Auflagefläche und die Anschlagsfläche senkrecht aufeinander.

Die Erfindung wird nachfolgend anhand von Ausführungsbeispielen näher erläutert; dabei zeigen beispielhaft:
- Figur 1: Bestandteile eines erfindungsgemäßen Gurtaufrollers in einer dreidimensionalen Explosionsdarstellung schräg von der Seite,
- Figur 2: eine Gurtspule des Gurtaufrollers in einer dreidimensionalen Sicht näher im Detail,
- Figur 3: ein Kraftübertragungselement des Gurtaufrollers gemäß Figur 1 näher im Detail,
- Figur 4: eine Sperrbasis des Gurtaufrollers gemäß Figur 1 näher im Detail und
- Figur 5: das Kraftübertragungselement gemäß Figur 3, nachdem es in einer Ausnehmung der Gurtspule gemäß Figur 2 eingesetzt worden ist.

In den Figuren werden der Übersicht halber für identische oder vergleichbare Komponenten stets dieselben Bezugszeichen verwendet.

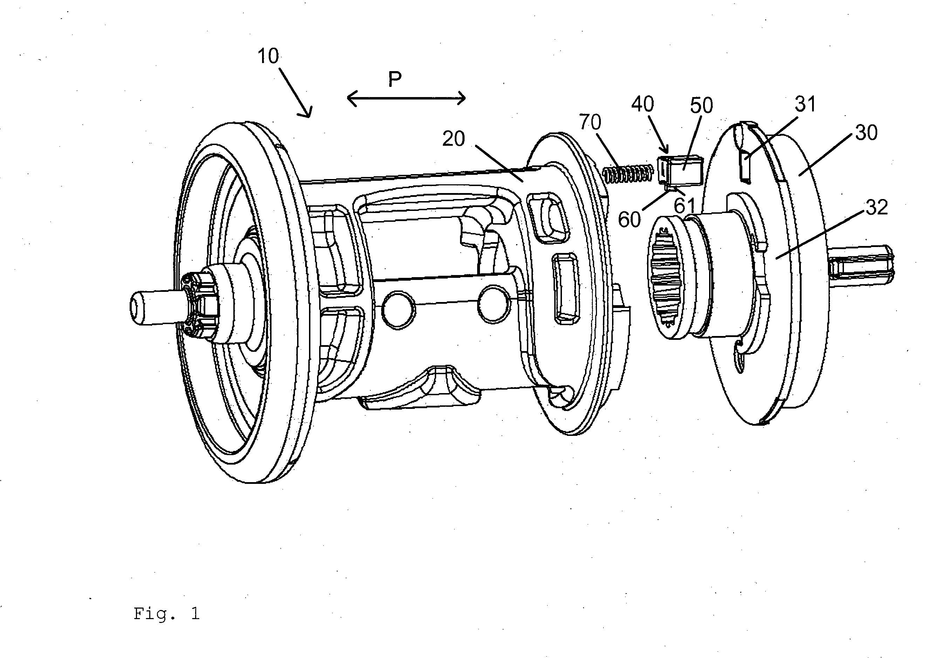

Die Figur 1 zeigt in einer dreidimensionalen Explosionsdarstellung schräg von der Seite Bestandteile eines Gurtaufrollers 10. Man erkennt in der Figur 1 eine Gurtspule 20, die zum Auf- und Abwickeln eines nicht gezeigten Sicherheitsgurts geeignet ist. Mit der Gurtspule 20 wirkt eine Sperrbasis 30 zusammen, die zum Blockieren der Gurtspule 20 im Falle eines abrupten Drehens der Gurtspule 20 in Gurtabwickelrichtung geeignet ist. Die Sperrbasis 30 ist hierzu mit einer nicht weiter dargestellten Sperrklinke versehen, die mit einer ebenfalls nicht dargestellten rahmenfesten Verzahnung des Gurtaufrollers zusammenwirken kann.

Die Figur 1 zeigt darüber hinaus ein Kraftübertragungselement 40, das einen Grundkörper 50 sowie einen Scherabschnitt 60 umfasst. Der Grundkörper 50 und der Scherabschnitt 60 sind vorzugsweise einteilig ausgebildet und beispielsweise durch ein einteiliges Gusselement gebildet.

Die Sperrbasis 30 weist eine Ausnehmung 31 auf, die so groß gewählt ist, dass der Grundkörper 50 in die Ausnehmung 31 vollständig eingeführt werden kann. Ein Einführen des Grundkörpers 50 in die Ausnehmung 31 erfolgt in axialer Richtung, also entlang der Pfeilrichtung P bzw. entlang der Längsrichtung der Gurtspule 20.

Mit dem Grundkörper 50 wirkt eine Feder 70 zusammen, deren Federkraft den Grundkörper 50 in Richtung der Ausnehmung 31 der Sperrbasis 30 bewegen will. Bei der Feder 70 kann es sich beispielsweise um eine Druckfeder handeln, die in einer Ausnehmung in der Gurtspule 20 gehalten wird und eine Druckkraft auf den Grundkörper 50 in Richtung der Ausnehmung 31 ausübt. Alternativ kann es sich bei der Feder 70 auch um eine Zugfeder handeln, die innerhalb der Ausnehmung 31 gehalten wird und eine Zugkraft auf den Grundkörper 50 ausübt, mit der der Grundkörper 50 in Richtung der Ausnehmung 31 gezogen wird.

Die Form der Ausnehmung 31 in der Sperrbasis 30 ist derart gewählt, dass ein vollständiges Hineinschieben des Grundkörpers 50 in die Ausnehmung 31 durch den Scherabschnitt 60 des Kraftübertragungselements 40 blockiert wird und der Grundkörper 50 in die Ausnehmung 31 nur abschnittsweise hineinragen kann. Mit anderen Worten ist die Querschnittsfläche der Ausnehmung 31 also kleiner als die Querschnittsfläche des Kraftübertragungselements 40 in einer Ebene senkrecht zur Spulenlängsrichtung der Gurtspule 20 bzw. in einer Ebene senkrecht zur Pfeilrichtung P in Figur 1. Aufgrund der Formgestaltung der Ausnehmung 31 ist es also nicht möglich, den Grundkörper 50 des Kraftübertragungselements 40 vollständig in die Ausnehmung 31 der Sperrbasis 30 einzuführen, solange der Scherabschnitt 60 an dem Grundkörper 50 angebunden ist.

Wegen der Federkraft der Feder 70, die den Grundkörper 50 in Richtung der Ausnehmung 31 der Sperrbasis 30 bewegen will, kommt es zu einem Aufliegen des Scherabschnitts 60 auf der Innenseite 32 der Sperrbasis 30. Die Auflagefläche des Scherabschnitts 60, die auf der Innenseite 32 der Sperrbasis 30 aufliegt, ist in der Figur 1 mit dem Bezugszeichen 61 gekennzeichnet.

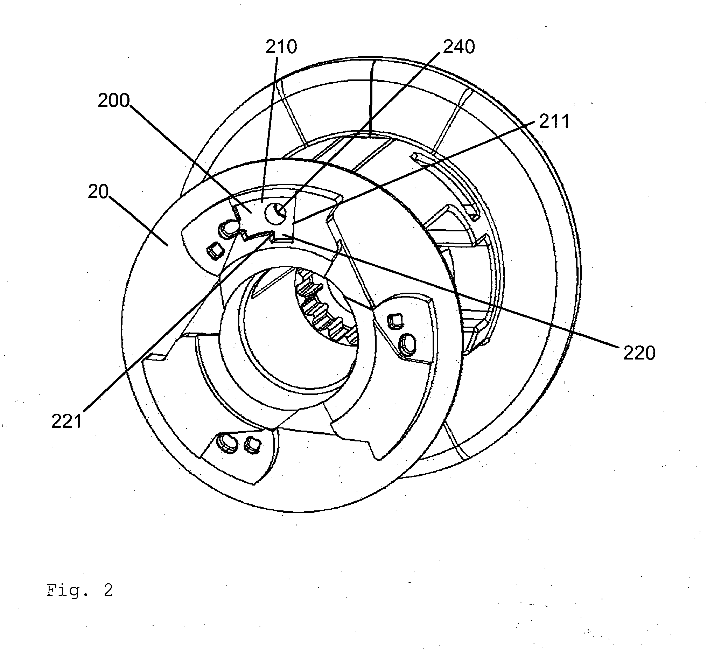

Die Figur 2 zeigt die Gurtspule 20 des Gurtaufrollers 10 gemäß Figur 1 näher im Detail. Man erkennt, dass auch die Gurtspule 20 mit einer Ausnehmung versehen ist; diese Ausnehmung ist mit dem Bezugszeichen 200 bezeichnet. Die Ausnehmung 200 weist einen ersten Aufnahmeabschnitt 210 und einen zweiten Aufnahmeabschnitt 220 auf.

Der erste Aufnahmeabschnitt 210 dient zur Aufnahme eines Abschnitts des Grundkörpers 50 des Kraftübertragungselements 40 (vgl. Figur 1). Es lässt sich anhand der Form des ersten Aufnahmeabschnitts 210 erkennen, dass dieser größer als der Grundkörper 50 gewählt ist; dadurch wird erreicht, dass der Grundkörper 50 innerhalb des ersten Aufnahmeabschnitts 210 ein gewisses Spiel hat. Sobald der Scherabschnitt 60 von dem Grundkörper 50 abgeschert ist, kann sich somit der Grundkörper 50 zumindest geringfügig innerhalb des ersten Aufnahmeabschnitts 210 bewegen, so dass die in der Figur 1 gezeigte Feder 70 den Grundkörper 50 aus dem ersten Aufnahmeabschnitt 210 heraus in Richtung der Ausnehmung 31 der Sperrbasis 30 und vorzugsweise vollständig in die Ausnehmung 31 hinein (vgl. Figur 1) bewegen kann.

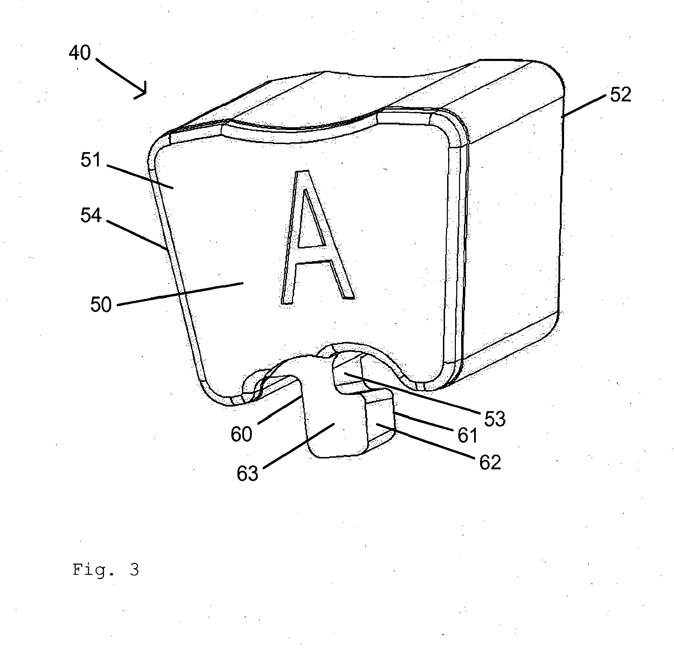

Im Ausgangszustand, also vor einem Abscheren des Scherabschnitts 60, liegt eine Kraftübertragungsfläche 54 (vgl. Figur 3) des Grundkörpers 50 bzw. des Kraftübertragungselements 40 vorzugsweise einer zugeordneten Kraftübertragungsfläche 211 des ersten Aufnahmeabschnitts 210 gegenüber bzw. an dieser an, so dass der Grundkörper 50 eine Kraftübertragung gemeinsam mit der Kraftübertragungsfläche 211 zwischen Gurtspule 20 und Sperrbasis 30 in Gurtabwickelrichtung gewährleisten kann.

Der zweite Aufnahmeabschnitt 220 der Ausnehmung 200 in der Gurtspule 20 dient zur Aufnahme des Scherabschnitts 60. Die Größe des zweiten Aufnahmeabschnitts 220 kann der Größe des Scherabschnitts 60 entsprechen oder auch größer als diese sein.

In der Figur 2 lässt sich darüber hinaus eine Scherfläche 221 erkennen, die zu dem zweiten Aufnahmeabschnitt 220 gehört und - im Ausgangszustand, also vor einem Abscheren des Scherabschnitts 60 - vorzugsweise seitlich an einer Anschlagsfläche 62 (vgl. Figur 3) des Scherabschnitts 60 anliegt. Die Aufgabe der Scherfläche 221 besteht darin, auf die Anschlagsfläche 62 des Scherabschnitts 60 einzuwirken und den Scherabschnitt 60 von dem Grundkörper 50 abzuscheren, sobald ein in den Figuren nicht gezeigter Strafferantrieb des Gurtaufrollers eingeschaltet wird und die Gurtspule zum Zwecke des Straffens des Sicherheitsgurtes in Gurtaufwickelrichtung gedreht wird.

Die Position der Scherfläche 221 und die der Kraftübertragungsfläche 211 des ersten Aufnahmeabschnitts 210 sind vorzugsweise derart gewählt, dass das Kraftübertragungselement 40 in der Ausnehmung 200 insgesamt spielfrei oder zumindest spielarm geführt wird.

Die Figur 2 zeigt darüber hinaus eine Vertiefung 240, die innerhalb der Ausnehmung 200 angeordnet ist und beispielsweise zur Aufnahme einer Druckfeder geeignet sein kann. Eine solche in der Vertiefung 240 befindliche Feder kann beispielsweise dazu dienen, den Grundkörper 50 aus dem ersten Aufnahmeabschnitt 210 heraus und in die Ausnehmung 31 der Sperrbasis 30 (vgl. Figur 1) zu drücken, sobald die Scherfläche 221 den Scherabschnitt 60 des Kraftübertragungselements 40 abgeschert hat.

Die Figur 3 zeigt das Kraftübertragungselement 40 gemäß Figur 1 näher im Detail. Man erkennt den Grundkörper 50, der eine in der Figur 3 vordere Seitenfläche 51 und eine in der Figur 3 hintere Seitenfläche 52 aufweist. Die beiden Seitenflächen 51 und 52 sind vorzugsweise parallel angeordnet. Die Seitenfläche 51 ist in der Figur 3 zusätzlich noch mit dem Bezugszeichen "A" näher gekennzeichnet.

Zur Montage des Kraftübertragungselements 40 in der Gurtspule 20 und der Sperrbasis 30 wird vorzugsweise die mit dem Bezugsbuchstaben "A" gekennzeichnete Seitenfläche 51 in die in der Figur 2 gezeigte Ausnehmung 200 eingeführt. Die Seitenfläche 52 des Grundkörpers 50 ragt dann in die Ausnehmung 31 der Sperrbasis 30 gemäß Figur 1 hinein.

Die Figur 3 zeigt darüber hinaus auch den Scherabschnitt 60 näher im Detail. Man erkennt eine Anschlagsfläche 62, die nach einer Montage des Kraftübertragungselements 40 in der Ausnehmung 200 gemäß Figur 2 an der Scherfläche 221 des zweiten Aufnahmeabschnitts 220 aufliegt. Sobald ein Strafferantrieb des Gurtaufrollers die Gurtspule zum Zwecke des Gurtstraffens in Bewegung versetzt, wird die Scherfläche 221 gemäß Figur 2 auf die Anschlagsfläche 62 drücken und den Scherabschnitt 60 von dem Grundkörper 50 aufgrund der Massenträgheit der Sperrbasis 30 trägheitsbedingt abscheren.

In der Figur 3 ist darüber hinaus eine Vorderfläche 63 des Scherabschnitts 60 erkennbar, die nach einem Einführen des Kraftübertragungselements 40 in die Ausnehmung 200 der Gurtspule 20 zugewandt ist. Die Vorderfläche 63 ist vorzugsweise parallel zu der Auflagefläche 61, mit der der Scherabschnitt 60 auf der Innenseite 31 der Sperrbasis 30 (vgl. Figur 1) aufliegt.

Um ein einfaches Abscheren des Scherabschnitts 60 von dem Grundkörper 50 bei Starten des Strafferantriebs des Gurtaufrollers sicherzustellen, ist der Verbindungsabschnitt 53 zwischen dem Scherabschnitt 60 und dem Grundkörper 50 vorzugsweise verjüngt ausgeführt und weist einen kleineren Querschnitt als der benachbarte Grundkörper 50 sowie der benachbarte Scherabschnitt 60 auf.

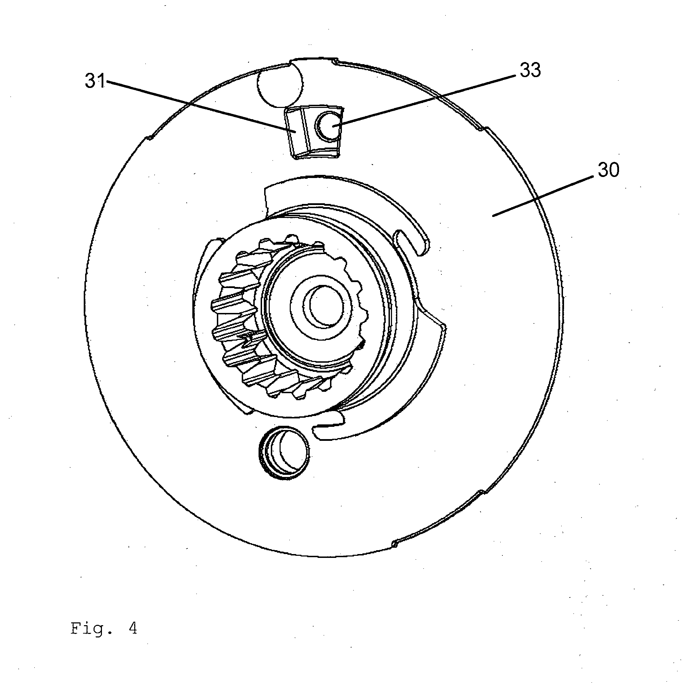

Die Figur 4 zeigt die Sperrbasis 30 des Gurtaufrollers 10 gemäß Figur 1 näher im Detail. Man erkennt die Ausnehmung 31, deren Form und Größe an die Form und Größe des Grundkörpers 50 (vgl. Figur 3) des Kraftübertragungselements 40 derart angepasst ist, dass der Grundkörper 50 in der Ausnehmung 31 spielfrei oder zumindest spielarm geführt wird.

Die Figur 4 zeigt darüber hinaus eine Vertiefung 33, die ein Einführen einer Zugfeder in die Ausnehmung 31 derart ermöglicht, dass die Zugfeder eine Zugkraft auf den Grundkörper 50 des Kraftübertragungselements 40 ausüben kann, die den Grundkörper 50 in die Ausnehmung 31 ziehen will. Sobald bei einer solchen Ausgestaltung der Scherabschnitt 60 vom Grundkörper 50 abgeschert worden ist, kann eine solche Zugfeder den Grundkörper 50 in die Ausnehmung 31 hineinziehen, so dass eine Kraftübertragung zwischen der Gurtspule 20 und der Sperrbasis 30 abgeschaltet wird.

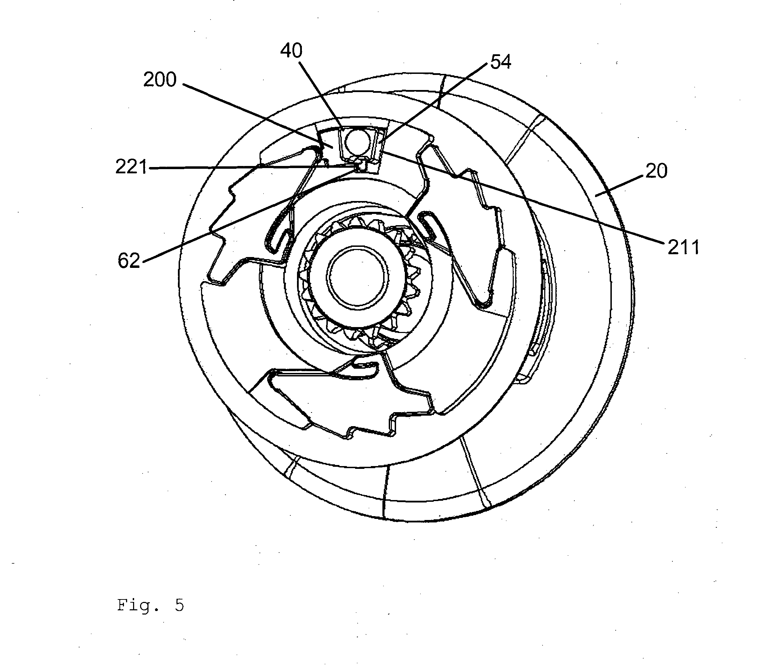

Die Figur 5 zeigt die Gurtspule 20 nochmals in einer weiteren Darstellung, nachdem das Kraftübertragungselement 40 in die Ausnehmung 200 eingeführt worden ist. Es lässt sich erkennen, dass die Anschlagsfläche 62 der Scherfläche 221 gegenüberliegt, so dass bei einer Inbetriebnahme des Strafferantriebs die Scherfläche 221 auf die Anschlagsfläche 62 einwirken und den Scherabschnitt 60 vom Grundkörper 50 abscheren kann.

Darüber hinaus lässt sich in der Figur 5 die Kraftübertragungsfläche 54 des Grundkörpers 50 bzw. des Kraftübertragungselements 40 erkennen, die der zugeordneten Kraftübertragungsfläche 211 des ersten Aufnahmeabschnitts 210 (vgl. Figur 2) gegenüber liegt und eine Kraftübertragung gemeinsam mit der Kraftübertragungsfläche 211 zwischen Gurtspule 20 und Sperrbasis 30 in Gurtabwickelrichtung gewährleistet.

Der Gurtaufroller 10 gemäß den Figuren 1 bis 5 lässt sich wie folgt betreiben:

### 1. Betrieb in Gurtabwickelrichtung:

Wird auf die Gurtspule 20 eine Kraft bzw. ein Drehmoment in Gurtabwickelrichtung ausgeübt, so wird die Kraftübertragungsfläche 211 der Gurtspule 20 auf die Kraftübertragungsfläche 54 des Grundkörpers 50 des Kraftübertragungselements 40 einwirken und die Kraftübertragungsfläche 54 in Gurtabwickelrichtung bewegen wollen. Da der Grundkörper 50 sowohl in dem ersten Aufnahmeabschnitt 210 der Ausnehmung 200 als auch in der Ausnehmung 31 der Sperrbasis 30 geführt wird, ist ein Drehen der Gurtspule 20 nur möglich, sofern die Sperrbasis 30 mitbewegt wird. Ist die Sperrbasis 30 gesperrt, beispielsweise im Falle eines abrupten Gurtbandauszugs, so wird ein Drehen der Gurtspule 20 in Gurtabwickelrichtung durch den stabilen Grundkörper 50 des Kraftübertragungselements 40 verhindert. Eine Relativdrehung zwischen der Gurtspule 20 und der Sperrbasis 30 kann erst erfolgen, nachdem der Grundkörper 50 selbst abgeschert wird. Der Grundkörper 50 kann beispielsweise derart dimensioniert sein, dass ein solches Abscheren bei einem Kraftniveau von z. B. 3000 Newton auftritt.

### 2. Betrieb in Gurtaufwickelrichtung:

Im Normalbetrieb - also vor einem Unfall, durch den der Strafferantrieb des Gurtaufrollers 10 ausgelöst wird - erfolgt eine Kraftübertragung zwischen der Gurtspule 20 und der Sperrbasis 30 durch den Scherabschnitt 60 des Kraftübertragungselements 40. Erst wenn die auf den Scherabschnitt 60 wirkende Kraft zu groß ist, beispielsweise zum Zeitpunkt der Inbetriebnahme des Strafferantriebs des Gurtaufrollers 10 aufgrund der Massenträgheit der Sperrbasis 30, kommt es zu einem Abscheren des Scherabschnitts 60, so dass die in der Figur 1 gezeigte Feder 70 den Grundkörper 50 aus der Ausnehmung 200 der Gurtspule 20 herausbewegen und vollständig oder nahezu vollständig in die Ausnehmung 31 der Sperrbasis 30 einführen kann.

Sobald der Grundkörper 50 den ersten Aufnahmeabschnitt 210 der Ausnehmung 200 der Gurtspule 20 verlassen hat, kann der Strafferantrieb die Gurtspule 20 in Gurtaufwickelrichtung drehen, ohne dass die Sperrbasis 30 mitbewegt werden muss. Mit anderen Worten dient der Scherabschnitt 60 des Kraftübertragungselements 40 dazu, eine Deaktivierung des Kraftübertragungselements 40 automatisch zu gewährleisten, sobald ein Strafferantrieb des Gurtaufrollers 10 aktiviert wird.

Im Normalbetrieb oder auch bei geringfügigen Unfällen mit niedriger Geschwindigkeit wird hingegen der Scherabschnitt 60 die auf ihn wirkenden Belastungen überstehen, so dass das Kraftübertragungselement 40 intakt bleibt und der Grundkörper 50 innerhalb des ersten Aufnahmeabschnitts 210 der Ausnehmung 200 verbleibt, so dass das Kraftübertragungselement 40 sowohl in Gurtabwickelrichtung als auch in Gurtaufwickelrichtung aktiv sein kann.

Lediglich bei Unfällen mit höherer Geschwindigkeit, bei denen der Strafferantrieb des Gurtaufrollers 10 aktiv wird, kommt es zu einer Zerstörung des Kraftübertragungselements 40 durch ein Abscheren des Scherabschnitts 60, so dass der Grundkörper 50 aus der Gurtspule 20 heraus und in die Sperrbasis 30 hineinbewegt wird und eine Kraftübertragung durch das Kraftübertragungselement 40 abgeschaltet wird.

Bei dem Ausführungsbeispiel gemäß den Figuren 1 bis 5 wurde beispielhaft davon ausgegangen, dass nach einem Abscheren des Scherabschnitts 60 vom Grundkörper 50 des Kraftübertragungselements 40 der Grundkörper 50 aus der Ausnehmung 200 der Gurtspule 20 heraus und in die Ausnehmung 31 der Sperrbasis 30 hineingeschoben wird, wodurch der Kraftfluss unterbrochen wird. Alternativ ist es genauso gut möglich, nach einem Abscheren des Scherabschnitts 60 den Grundkörper 50 aus der Ausnehmung 31 der Sperrbasis 30 heraus und in die Ausnehmung 200 der Gurtspule 20 hineinzubewegen, um eine Kraftübertragung durch das Kraftübertragungselement 40 zwischen der Sperrbasis 30 und der Gurtspule 20 abzustellen.

### Bezugszeichenliste

- 10: Gurtaufroller
- 20: Gurtspule
- 30: Sperrbasis
- 31: Ausnehmung
- 32: Innenseite
- 33: Vertiefung
- 40: Kraftübertragungselement
- 50: Grundkörper
- 51: vordere Seitenfläche
- 52: hintere Seitenfläche
- 53: Verbindungsabschnitt
- 54: Kraftübertragungsfläche
- 60: Scherabschnitt
- 61: Auflagefläche
- 62: Anschlagsfläche
- 63: Vorderfläche
- 70: Feder
- 200: Ausnehmung
- 210: erster Aufnahmeabschnitt
- 211: Kraftübertragungsfläche
- 220: zweiter Aufnahmeabschnitt
- 221: Scherfläche
- 240: Vertiefung

- A: Seitenfläche
- P: Pfeilrichtung

## Patentansprüche

1. Gurtaufroller (10) für einen Sicherheitsgurt mit einer Gurtspule (20) zum Auf- und Abwickeln des Sicherheitsgurts, einer mit der Gurtspule (20) in Verbindung stehenden, sperrbaren Sperrbasis (30), die zum Blockieren der Gurtspule (20) im Falle eines abrupten Drehens der Gurtspule (20) in Gurtabwickelrichtung geeignet ist, und einem Kraftübertragungselement (40), das in einer Verriegelungsposition die Gurtspule (20) und die Sperrbasis (30) koppelt und in einer Entriegelungsposition inaktiv ist,
**dadurch gekennzeichnet, dass**
- das Kraftübertragungselement (40) einen Grundkörper (50) und einen abscherbaren Scherabschnitt (60) aufweist,
- wobei der Grundkörper (50) in einer Ausnehmung (200, 31) eines der beiden Teile, also der Gurtspule (20) oder der Sperrbasis (30), - nachfolgend erstes Teil genannt - axial verschieblich gehalten wird und von einer ersten Position, in der der Grundkörper (50) aus der Ausnehmung (200, 31) herausragt und in das andere der beiden Teile - nachfolgend zweites Teil genannt - eingreift, in eine zweite Position, in der der Grundkörper (50) tiefer in die Ausnehmung (200, 31) eingeführt ist und von dem zweiten Teil getrennt ist, axial verschoben werden kann, und
- wobei der Scherabschnitt (60) in der ersten Position des Grundkörpers (50) ein axiales Verschieben des Grundkörpers(50) von der ersten in die zweite Position blockiert und erst nach einem Abscheren das tiefere Hineinschieben des Grundkörpers (50) in die Ausnehmung (200, 31) ermöglicht.

2. Gurtaufroller nach Anspruch 1,
**dadurch gekennzeichnet, dass**
der Scherabschnitt (60) eine Anschlagsfläche (62) aufweist, gegen die das zweite Teil bei Drehung der Gurtspule (20) in Gurtaufwickelrichtung radial drückt und über die ein Abscheren des Scherabschnitts (60) durch das zweite Teil bei Drehen der Gurtspule (20) in Gurtaufwickelrichtung erfolgt, wenn die auf die Anschlagsfläche (62) wirkende Gurtaufwickelkraft eine vorgegebene Kraftschwelle überschreitet.

3. Gurtaufroller nach einem der voranstehenden Ansprüche,
**dadurch gekennzeichnet, dass**
- der Gurtaufroller (10) einen Strafferantrieb aufweist und
- die Stabilität des Scherabschnitts (60) derart gewählt ist, dass bei Inbetriebnahme des Strafferantriebs der Scherabschnitt (60) abgeschert wird und der Grundkörper (50) von der ersten in die zweite Position verschoben werden kann.

4. Gurtaufroller nach einem der voranstehenden Ansprüche,
**dadurch gekennzeichnet, dass**
der Gurtaufroller (10) eine Feder (70) aufweist, deren Federkraft den Grundkörper (50) in Richtung der zweiten Position bewegen will.

5. Gurtaufroller nach einem der voranstehenden Ansprüche,
**dadurch gekennzeichnet, dass**
- das zweite Teil eine Ausnehmung (200) mit einem ersten Aufnahmeabschnitt (210) und einem zweiten Aufnahmeabschnitt (220) aufweist und
- in der ersten Position des Grundkörpers (50) ein Abschnitt des Grundkörpers (50) in den ersten Aufnahmeabschnitt (210) des zweiten Teils und der Scherabschnitt (60) in den zweiten Aufnahmeabschnitt (220) des zweiten Teils eingreifen.

6. Gurtaufroller nach einem der voranstehenden Ansprüche,
**dadurch gekennzeichnet, dass**
der erste Aufnahmeabschnitt (210) des zweiten Teils größer als der darin befindliche Abschnitt des Grundkörpers (50) ist und der Grundkörper (50) in dem ersten Aufnahmeabschnitt (210) Spiel hat.

7. Gurtaufroller nach einem der voranstehenden Ansprüche,
**dadurch gekennzeichnet, dass**
der Grundkörper (50) bei Erreichen oder Überschreiten einer vorgegebenen Kraft in Gurtabwickelrichtung abscherbar ist.

8. Gurtaufroller nach einem der voranstehenden Ansprüche,
**dadurch gekennzeichnet, dass**
der Grundkörper (50) mechanisch stabiler als der Scherabschnitt (60) ist und die zum Abscheren des Grundkörpers (50) erforderliche Scherkraft größer als die zum Abscheren des Scherabschnitts (60) erforderliche Scherkraft ist.

9. Gurtaufroller nach einem der voranstehenden Ansprüche,
**dadurch gekennzeichnet, dass**
der Scherabschnitt (60) eine Auflagefläche (61) aufweist, die in axialer Richtung außen auf dem ersten Teil aufliegt und vor einem Abscheren des Scherabschnitts (60) ein Verschieben des Grundkörpers (50) von der ersten in die zweite Position blockiert.

10. Gurtaufroller nach einem der voranstehenden Ansprüche,
**dadurch gekennzeichnet, dass**
die Auflagefläche (61) und die Anschlagsfläche (62) senkrecht aufeinander stehen.

## Claims

1. Belt roller (10) for a safety belt having a belt coil (20) for winding and unwinding the safety belt, a lockable locking base (30) which is connected to the belt coil (20) and which is suitable for blocking the belt coil (20) in the event of an abrupt rotation of the belt coil (20) in the belt unwinding direction, and a force transmission element (40) which couples the belt coil (20) and the locking base (30) in a locking position and is inactive in an unlocking position, **characterized in that**
- the force transmission element (40) has a base member (50) and a shearing portion (60) which can be sheared off,
- wherein the base member (50) is retained in an axially displaceable manner in a recess (200, 31) of one of the two portions, that is to say, the belt coil (20) or the locking base (30) - referred to below as the first portion - and can be axially displaced from a first position, in which the base member (50) protrudes from the recess (200, 31) and engages in the other of the two portions - referred to below as the second portion - into a second position, in which the base member (50) is introduced more deeply into the recess (200, 31) and is separated from the second portion, and
- wherein the shearing portion (60) in the first position of the base member (50) blocks an axial displacement of the base member (50) from the first position into the second position and allows the base member (50) to be introduced more deeply into the recess (200, 31) only after a shearing action.

2. Belt roller according to Claim 1,
**characterized in that**
the shearing portion (60) has a stop face (62) against which the second portion presses radially when the belt coil (20) is rotated in the belt winding direction and by means of which the shearing portion (60) is sheared off by the second portion when the belt coil (20) is rotated in the belt winding direction when the belt winding force acting on the stop face (62) exceeds a predetermined force threshold.

3. Belt roller according to either of the preceding claims,
**characterized in that**
- the belt roller (10) has a tightening drive and
- the stability of the shearing portion (60) is selected in such a manner that, when the tightening drive is operated, the shearing portion (60) is sheared off and the base member (50) can be moved from the first position into the second position.

4. Belt roller according to one of the preceding claims,
**characterized in that**
the belt roller (10) has a spring (70) whose resilient force seeks to move the base member (50) in the direction of the second position.

5. Belt roller according to one of the preceding claims,
**characterized in that**
- the second portion has a recess (200) having a first receiving portion (210) and a second receiving portion (220) and,
- in the first position of the base member (50), a portion of the base member (50) engages in the first receiving portion (210) of the second portion and the shearing portion (60) engages in the second receiving portion (220) of the second portion.

6. Belt roller according to one of the preceding claims,
**characterized in that**
the first receiving portion (210) of the second portion is larger than the portion of the base member (50) located therein and the base member (50) has play in the first receiving portion (210).

7. Belt roller according to one of the preceding claims,
**characterized in that**
the base member (50) can be sheared off when a predetermined force is reached or exceeded in the belt unwinding direction.

8. Belt roller according to one of the preceding claims,
**characterized in that**
the base member (50) is mechanically more stable than the shearing portion (60) and the shearing force which is required to shear the base member (50) off is greater than the shearing force required to shear off the shearing portion (60).

9. Belt roller according to one of the preceding claims,
**characterized in that**
the shearing portion (60) has a support face (61) which is positioned in an axial direction at the outer side on the first portion and which, before the shearing portion (60) is sheared off, blocks a displacement of the base member (50) from the first position into the second position.

10. Belt roller according to one of the preceding claims,
**characterized in that**
the support face (61) and the stop face (62) are located perpendicularly one on the other.

## Revendications

1. Enrouleur de ceinture (10) pour une ceinture de sécurité comprenant un rouleau de ceinture (20) pour enrouler et dérouler la ceinture de sécurité, une base de verrouillage (30) pouvant être verrouillée, en liaison avec le rouleau de ceinture (20), qui est prévue pour bloquer le rouleau de ceinture (20) dans le cas d'une rotation abrupte du rouleau de ceinture (20) dans la direction de déroulement de la ceinture, et un élément de transfert de force (40) qui, dans une position de verrouillage, accouple le rouleau de ceinture (20) et la base de verrouillage (30), et qui est inactif dans une position de déverrouillage,
**caractérisé en ce que**
- l'élément de transfert de force (40) présente un corps de base (50) et une section de cisaillement (60) pouvant être cisaillée,
- le corps de base (50) étant retenu de manière déplaçable axialement dans un évidement (200, 31) de l'une des deux pièces, à savoir le rouleau de ceinture (20) ou la base de verrouillage (30) - ci-après appelée première pièce -, et pouvant être déplacé axialement depuis une première position, dans laquelle le corps de base (50) fait saillie hors de l'évidement (200, 31) et s'engage dans l'autre des deux pièces - ci-après appelée deuxième pièce -, dans une deuxième position, dans laquelle le corps de base (50) est enfoncé plus profondément dans l'évidement (200, 31) et est séparé de la deuxième pièce, et
- la portion de cisaillement (60), dans la première position du corps de base (50), bloquant un déplacement axial du corps de base (50) de la première dans la deuxième position et permettant, seulement après un cisaillement, l'enfoncement plus profond du corps de base (50) dans l'évidement (200, 31).

2. Enrouleur de ceinture selon la revendication 1,
**caractérisé en ce que**
la portion de cisaillement (60) présente une surface de butée (62), contre laquelle la deuxième pièce, lors de la rotation du rouleau de ceinture (20), presse radialement dans la direction d'enroulement de la ceinture et par le biais de laquelle se produit un cisaillement de la portion de cisaillement (60) par la deuxième pièce lors de la rotation du rouleau de ceinture (20) dans la direction d'enroulement de la ceinture, lorsque la force d'enroulement de la ceinture agissant sur la surface de butée (62) dépasse un seuil de force prédéfini.

3. Enrouleur de ceinture selon l'une quelconque des revendications précédentes, **caractérisé en ce que**
- l'enrouleur de ceinture (10) présente un entraînement de dispositif tendeur et
- la stabilité de la portion de cisaillement (60) est choisie de telle sorte que lors de la mise en fonctionnement de l'entraînement de dispositif tendeur, la portion de cisaillement (60) soit cisaillée et le corps de base (50) puisse être déplacé de la première dans la deuxième position.

4. Enrouleur de ceinture selon l'une quelconque des revendications précédentes,
**caractérisé en ce que**
l'enrouleur de ceinture (10) présente un ressort (70) dont la force de ressort déplacera le corps de base (50) dans la direction de la deuxième position.

5. Enrouleur de ceinture selon l'une quelconque des revendications précédentes,
**caractérisé en ce que**
- la deuxième pièce présente un évidement (200) avec une première portion de réception (210) et une deuxième portion de réception (220) et
- dans la première position du corps de base (50), une portion du corps de base (50) s'engage dans la première portion de réception (210) de la deuxième pièce et la portion de cisaillement (60) s'engage dans la deuxième portion de réception (220) de la deuxième pièce.

6. Enrouleur de ceinture selon l'une quelconque des revendications précédentes,
**caractérisé en ce que**
la première portion de réception (210) de la deuxième pièce est plus grande que la portion du corps de base (50) se trouvant dans celle-ci et le corps de base (50) présente un certain jeu dans la première portion de réception (210).

7. Enrouleur de ceinture selon l'une quelconque des revendications précédentes,
**caractérisé en ce que**
le corps de base (50), après qu'une force prédéfinie a été atteinte ou dépassée, peut être cisaillé dans la direction de déroulement de la ceinture.

8. Enrouleur de ceinture selon l'une quelconque des revendications précédentes,
**caractérisé en ce que**
le corps de base (50) est plus stable mécaniquement que la portion de cisaillement (60) et la force de cisaillement nécessaire pour le cisaillement du corps de base (50) est supérieure à la force de cisaillement nécessaire pour le cisaillement de la portion de cisaillement (60).

9. Enrouleur de ceinture selon l'une quelconque des revendications précédentes,
**caractérisé en ce que**
la portion de cisaillement (60) présente une surface d'appui (61), qui repose dans la direction axiale à l'extérieur sur la première pièce et qui, avant un cisaillement de la portion de cisaillement (60), bloque un déplacement du corps de base (50) de la première dans la deuxième position.

10. Enrouleur de ceinture selon l'une quelconque des revendications précédentes,
**caractérisé en ce que**
la surface d'appui (61) et la surface de butée (62) sont perpendiculaires l'une à l'autre.
